# EUROPEAN PATENT APPLICATION

(11) **EP 4 070 921 A1**
(43) Date of publication of application: **12.10.2022**
(21) Application number: 21167442.9
(22) Date of filing: 08.04.2021
(51) Int. Cl.: B25J 9/16, B25J 19/02, B25J 19/06

(54) **A SAFETY SYSTEM FOR A COLLABORATIVE ROBOT**

(71) Applicant: Collobro AB, 252 70 Råå (SE)
(72) Inventor: JÖNZON, Anders, 252 70 RÅÅ (SE)
(74) Representative: Ström & Gulliksson AB

(57) **Abstract**

A safety system (100) for a collaborative robot (10) is provided. The safety system comprises at least one sensor (110) configured to monitor the presence of objects in a safety zone (5) extending horizontally from said at least one sensor (110), and at least one structural member (120) configured to support a robot (10) arranged vertically above the safety system (100). The safety system (100) further comprises a controller (130) configured to define one or more protection areas (7a-d) within the safety zone (5) and configured to determine the presence of an unwanted object (3) within the one or more protection areas (7a-d), and wherein the one or more protection areas (7a-d) are defined such that the at least one structural member (120) is arranged within the safety zone (5) and outside the one or more protection areas (7a-d).

## Description

### Technical Field

The present invention relates to a safety system for use with collaborative robots. In particular, the invention relates to a safety system configured to detect the presence of humans within a safety zone at least partly surrounding an associated collaborative robot.

### Background

Traditional industrial robots, such as six axis manipulators, are designed to operate autonomously or with limited human guidance. Collaborative robots, commonly denoted as "cobots", are robots or manipulators intended to be able to physically interact with humans in a safe way within a shared workspace. As of today there is a rapid increase of the use of cobots in several industrial manufacturing fields.

Cobots, being specifically conceived for human interactions, have the advantage of being safer than traditional robots in that they are able to identify human touch and/or proximity and to reduce speed or stop its motion upon such detection. Cobots are in contrast with robots therefore also useful for supporting humans addressing smaller tasks that could otherwise be inappropriate for humans, e.g. repetitive tasks, unhealthy/dangerous tasks, e.g. heavy weight lifting or toxic glue applying.

Cobots being configured to identify human touch or presence and stop or change its motion in a safe and secure manner can thereby meet the legal safety requirements for not requiring classic robot cell fencing or similar safety solutions, provided that the cobot also do not violate applicable speed limits within workspaces where humans can interact. Therefore, cobots also bring about space savings in a facility layout, but more importantly give a great possibility for the design of flexible and movable cobot platforms that can be moved around to and between multiple tasks and work stations within a factory where they are set to collaborate with humans or standalone doing autonomous tasks, or a combination thereof.

Such moveable cobot platform provides for great flexibility and utilization. Classic robot cell investments with fixed safety systems such as cell fencing are less flexible and therefore require larger production series or several smaller volume series with very similar work tasks to become profitable. With the described movable cobot platform on the other hand, this is less of a requirement as such platform is flexible and can be used at several different tasks with greater variation within a facility layout and can therefore become more profitable at lower production series volume and with tasks of more varying kind.

There is an undesirable downside with such fenceless cobot platforms though, making such investment less profitable. The speed reduction of the cobot being required for the cobot to be safe without a regulatory approved safety zone reduces the speed for any and all tasks whether having anything from none to constant human presence or interaction, in contrast to the "fenced" industrial robot which always may run at full speed as long as nothing interferes.

To circumvent this and correlative machine safety design obstacles in other corresponding challenges, there are many different fenceless safety systems and equipments on the market today. One segment for such solutions is the safety scanner segment, where the area around a risk assessment is scanned by the safety scanner to identify and prevent hazards at any intrusion by a human or object into the zone.

Cobot cells as well as robot cells are quite often provided with such safety scanner systems to give quick and easy access to the cell for material handling or for interaction by humans. The cobot as well as the robot can then operate at full speed until a human or other foreign object interferes within the safety zone. The difference between cobots and robots then is that the robot must be fully stopped at close human interaction, while a cobot meeting the regulations for collaboration, may still run at a restricted speed as they also have the ability to stop at a collision. Such safety scanner systems are however both expensive and complex and they often require both several safety scanner devices as well as complex and task specific control system hardware and software setup, quickly limiting some of the strongest advantages of a cobot; flexibility and fast and simple set-up.

Fenceless robot system using laser scanners to detect workspace intrusion is, for example, known from "The Shrinking Footprint of Robot Safety" by Tanya M. Anandan, Robotic Industries Association, posted Oct. 6, 2014.

The robot and the workstation at which the robot performs work are positioned on a movable platform. Four laser scanners are installed at the corners of the movable platform and close to the floor, scanning horizontally. When a human being is present, the scanners provide a control signal for the robot system to operate slower.

The above-described solution is very complex and costly, as well as providing low degree of flexibility. Thus, there is a desire to reduce the number of laser scanners as well as complexity of the system.

US2008021597 discloses another solution for monitoring the area surrounding a robot. A large number of non-contacting proximity sensors are arranged to the base of the robot so that a safety relevant part of the working area of the robot is covered by the detection areas of the proximity sensors. Further, a laser scanner is fitted to the base of the robot and arranged to monitor a rear part of the working area. The laser scanner together with the non-contacting proximity sensors approximately cover the working area of the robot. Due to the large number of proximity sensors, there is no problem if one of the sensors is hidden since the other sensors will be able to detect an intrusion of human. However, the proposed safety sensor system is very complex, requiring a vast amount of hardware and advanced programming.

There is thus a need to overcome the above described problems by developing an improved and flexible cobot, in particular by providing a safety system which is cost efficient, safe, flexible, and quick and simple to set up for new tasks.

### Summary

It is an object of the invention to at least partly overcome one or more of the above-identified limitations of the prior art. In particular, it is an object to provide a safety system allowing a collaborative robot to be moved between existing tasks and which makes it possible for humans to interact and collaborate with the robot in a safe and regulatory approved way simultaneously as the same robot is approved to run with the high speed of a traditionally fenced robot whenever humans or unauthorized objects are absent from an associated safety zone.

According to a first aspect a safety system for a collaborative robot is provided. The safety system comprises at least one sensor configured to monitor the presence of objects in a safety zone extending horizontally from said at least one sensor, and at least one structural member configured to support a robot or manipulator arranged vertically above the safety system. The safety system further comprises a controller configured to define one or more protection areas within the safety zone and configured to determine the presence of an unwanted object within the one or more protection areas, wherein the one or more protection areas are defined such that the at least one structural member is arranged within the safety zone and outside the one or more protection areas.

The controller may be configured to define two or more protection areas, and wherein the maximum horizontal distance between two adjacent protection areas is less than 30 cm, preferably less than 15 cm. The segment being shadowed by the structural member(s) is thereby small enough to not being able to fully accommodate a person, which means that some part of a person will always be inside the one or more protection areas such that it is detectable by the safety system.

The controller may be further configured to define occupied areas corresponding to stationary objects within the safety zone, and wherein the occupied areas are excluded from the one or more protection areas. It is thus possible to program the safety system to disregards fixed installations and equipment being inside the safety zone, but not causing a danger for the operation of the associated robot.

The one or more protection areas may equal the safety zone minus an area being shadowed by the at least one structural member, and optionally minus the occupied areas. This ensures maximum safety, as the entire safety zone, except the shadowed area and possible areas corresponding to fixed installations and equipment, is monitored by the safety system.

The at least one sensor may be in the form of at least one area scanner. This allows for the use of commercially available components having high robustness and accuracy.

The safety system may comprise a plurality of structural members arranged at an equal distance from the at least one sensor and in circular symmetry around said at least one sensor. This provides for a significant advantage, as the at least one sensor can be rotated in fixed steps which correspond to the areas shadowed by the structural members. In particular, such rotation of the at least one sensor will not affect the configuration of the safety system and the programmed definition of the safety zones. It is even possible to provide a system with a certain number of structural members, but having a multiple of the number of structural members as pre-programmed shadowed areas such that the structural members are always within a shadowed area, but further shadowed areas are provided between two adjacent structural members. The at least one sensor can thus be allowed to rotate in fixed steps corresponding to the number of shadowed areas, which increases the number of possible rotational positions for the at least one sensor.

The at least one structural member may have a horizontal cross-section being extended in the direction away from said at least one sensor (110). In one embodiment the width of each structural member, seen in the scanning or sensing plane, is below 10 mm, preferably even below 5 mm.

The safety zone may extend 270°-360° around the at least one sensor. Hence, efficient monitoring of the area around the robot is made possible.

The safety system may comprise a plurality of sensors, wherein each sensor is monitoring a sub-safety zone forming part of the safety zone of the safety system. By such arrangement it is possible to have a specific sensor directed in a first direction and monitoring in such first direction, and at least one other sensor directed in a different direction and monitoring in such different direction.

According to a second aspect, a collaborative robot system is provided. The robot system comprises a collaborative robot and a safety system according to the first aspect. The safety system is configured to transmit a control signal to the collaborative robot upon detection of an unwanted object within the one or more protection areas.

The at least one sensor may be vertically aligned with a base of the collaborative robot. More simple setup of the safety system is achieved by having the sensor(s) vertically aligned with a centre of the robot, due to the obtained symmetry.

The robot system may further comprise a moveable platform, and the safety system may be arranged vertically between the moveable platform and the collaborative robot. It is thus possible to provide the moveable platform as a moveable platform, which allows the entire robot system to be easily positioned. Further, the sensor system can be positioned at a vertical distance from the ground or floor, while still at a sufficiently low level to detect persons approaching the robot system. As the sensor system monitors a horizontal plane being arranged at a vertical distance from the floor, fixed equipment can be arranged underneath the horizontal scanning plane.

The robot system may further comprise a robot control system arranged vertically between the safety system and the moveable platform. The control system will thereby not occupy any of the working area of the robot.

The collaborative robot may be connected by means of one or more connectors, each connector being arranged not to interfere with the one or more protection areas. The connectors will thereby not reduce the size of the protection areas, thus maximizing the safety of the robot system.

The at least one sensor of the safety system may be rotatable relative the collaborative robot. As explained earlier, this provides for a significant advantage as the at least one sensor can be rotated in fixed steps which correspond to the areas shadowed by the structural members.

### Brief Description of the Drawings

The present invention will hereinafter be further explained by means of non-limiting examples with reference to the appended schematic figures where;
Fig. 1 is a schematic side view of a collaborative robot system according to an embodiment;
Fig. 2 is a schematic side view of a collaborative robot system according to another embodiment;
Fig. 3 is a top view of a collaborative robot system according to an embodiment;
Fig. 4 is a top view of a collaborative robot system according to another embodiment; and
Fig. 5 is a top view of a collaborative robot system according to a further embodiment.

### Detailed Description

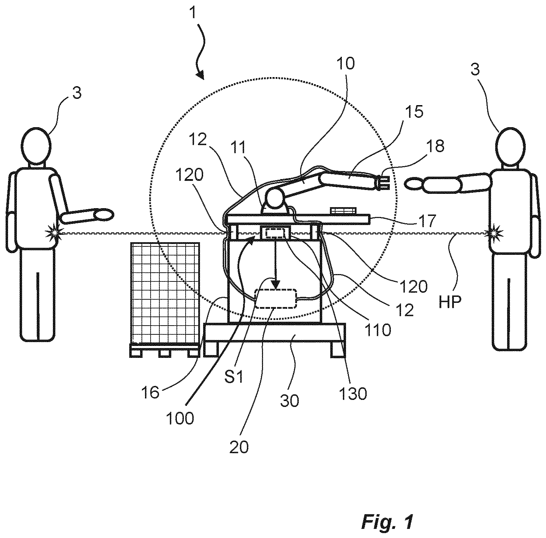

Starting in Fig. 1, a collaborative robot system 1 is schematically shown. The major components of the collaborative robot system 1 are a robot 10 and a thereto associated safety system 100. The term "robot" should in this context be interpreted broadly to cover moveable devices being controlled by a computer program to perform one or more tasks. In a preferred embodiment the robot 10 is embodied as an articulated arm 15 having articulations with several degrees of freedom, such as a six-axis manipulator.

The robot 10 is controlled by a robot control system 20 which forms part of the robot 10, but preferably the robot control system 20 is positioned remote from the actual robot arm 15. As can be seen in Fig. 1 the collaborative robot system 1 comprises a platform 30. The platform 30, which preferably is moveable by having one or more supporting wheels or other means for facilitating easy transport and repositioning, supports a housing 16 of the robot 10. The platform 30 may be further configured to be connected to a docking station (not shown), whereby specific connection means may be provided on the platform 30.

The housing 16 encloses the robot control system 20, as well as other components like power supply, electronic circuits, wires and cables, etc. (not shown). The robot arm 15 is arranged vertically above the housing 16, however the safety system 100 is positioned vertically between the housing 16 and the robot arm 15.

As can be further seen in Fig. 1, the robot arm 15 is connected to the housing 16, and in particular to the robot control system 20, by one or more cables 12. These cables 12 pass the safety system 100 as will be further explained below.

For robust mounting of the robot arm 15 the robot 10 comprises a base 11. The base 11 is typically a rigid body providing the required robustness and stability for the robot arm 15 during operation. The base 11 is preferably securely attached to a table top 17. The table top 17 may have a horizontal extension being larger than the top surface of the housing 16 such that it provides a working area for the robot arm 15. The table top 17 may also be used as a storage area for equipment and goods; since the table top 17 is arranged remote from the vertical position of the safety system 100, any objects positioned on the table top 17 will not be detected by the safety system 100.

For facilitated connection of the robot arm 15 the base 11 may include electronics to control the operation of the joints of the robot 15. Hence, only one cable 12 is necessary for controlling the articulations of the robot arm 15.

A further cable 12 may be used to connect the robot control system 20 to a robot tool 18 arranged at the far end of the robot arm 15. The robot tool 18 may be any suitable robot tool commercially available or suggested in the art.

The safety system 100 comprises at least one sensor 110 and a controller 130. The sensor 110 is configured to monitor an area surrounding the collaborative robot system 1, and the controller 130 is programmed to provide a control signal S1 to the robot control system 20 if any unwanted object, such as a person 3, is within a predetermined distance from the robot arm 15. Upon receipt of such control signal S1, the robot control system 20 will control the current operation of the robot 10 in any suitable way. For example, the robot control system 20 may, upon receipt of the control signal S1, control the robot arm 15 to slow down, or to stop moving. This allows the robot 1 to operate at full speed as long as there is no danger for operation; as soon as any object, such as a person 3, is approaching the collaborative robot system 1 the safety system 100 will detect such object by means of the at least one sensor 110 and the controller 130 will transmit the control signal S1 to the robot control system 20.

The safety system 100 is configured to monitor a horizontal plane HP extending away from the at least one sensor 110. As is further shown in Fig. 1 the safety system 100 has one or more structural members 120 supporting the robot arm 15, and in particular the table top 17 carrying the robot arm 15.

The at least one sensor 110, oriented to detect objects radially outwards from the at least one sensor 110, is preferably vertically aligned with the base 11 of the robot 10. The structural members 120 are consequently partially arranged in the horizontal plane HP and they will thus be detectable by the at least one sensor 110. Hence, the controller 130 is programmed to disregard sectors of the horizontal plane HP corresponding to the positions of the structural members 120 such that the control signal S1 is not generated because of the presence of the structural members 120.

In order to minimize the size of the disregarded sectors of the horizontal plane HP the structural members 120 are preferably arranged at a radial distance from the at least one sensor 110. This also provides a more robust support for the robot arm 15. Yet further, at the vertical location of the horizontal plane HP the structural members 120 are made as thin as possible, preferably in the range of 2-10 mm or even more preferably 3-5 mm. The material of the structural members 120 should be as rigid as possible; e.g. they are made of stainless steel or similar. Each structural member may be very thin in the circumferential direction (i.e. its width, especially in the horizontal plane HP), however it may have a substantial extension in the radial direction in order to improve robustness of the structural member 120.

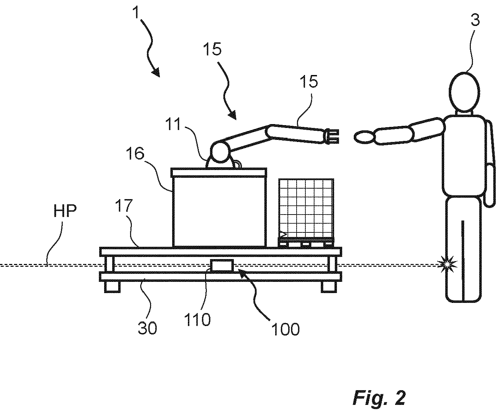

Now turning to Fig. 2 another embodiment of a collaborative robot system 1 is shown. While the robot system 1 includes the same components and parts as the embodiment shown in Fig. 1, in Fig. 2 the robot system 1 has a different arrangement of the safety system 100. Here, the safety system 100 is arranged vertically between the platform 30 and the robot housing 16. This means the vertical position of the horizontal scanning plane HP is lower than for the embodiment of Fig. 1. As for the embodiment of Fig. 1, the at least one sensor 110 is preferably vertically aligned with the base 11 of the robot 10 in order to provide circular symmetry of the safety system 100 around the robot 10.

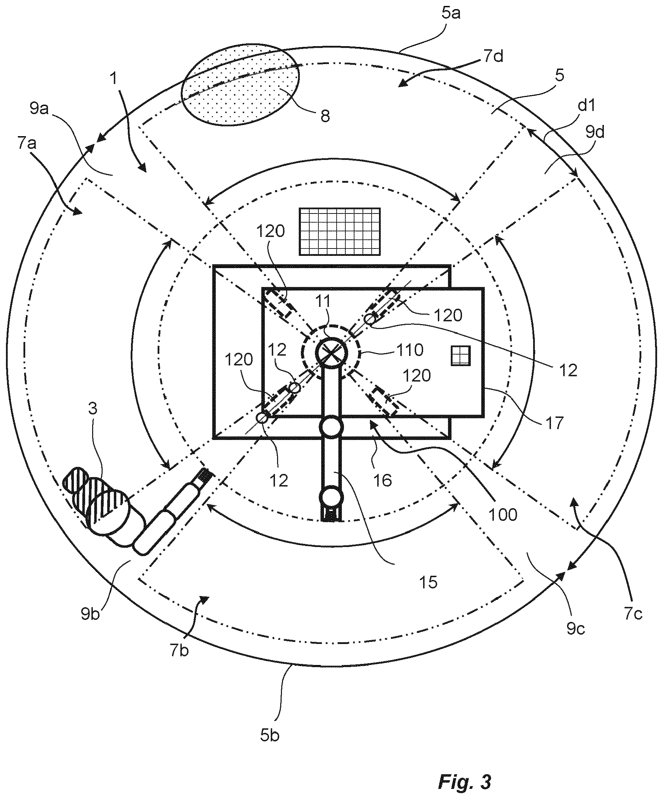

In Fig. 3 a schematic setup of a collaborative robot system 1 is shown, as seen from above. The robot system 1 comprises the same hardware components as described with reference to the embodiments of Figs. 1-2, and especially in Fig. 3 the housing 16, the robot arm 15, the base 11, and the table top 17 are indicated. However, in the following description the operation and configuration of the safety system 100 will be described.

The safety system 100 has one or more sensors 110 arranged centrally, preferably vertically aligned with the base 11 of the robot arm 15. In one embodiment, the at least one sensor 110 is provided as one or more laser scanner units. A rotating laser beam is emitted in the horizontal plane HP to detect objects within the working area of the specific laser scanner unit. Typical laser scanner units available on the market today lack the possibility to monitor 360° around the laser scanner unit, instead these are limited to a scanning area of around 270°. For such systems there will thus be a dead angle in which approaching objects cannot be detected. However, as will be explained in the following sections configurations are suggested where this limitation is overcome without reducing the safety and robustness of the safety system 100.

In another embodiment the safety system 100 comprises two or more sensors 110 directed at different directions. For example, two sensors 110 in the form of laser scanning units may be oriented to face in directions spaced apart by 180°. The two laser scanning units 110 may be arranged vertically, such that one laser scanning unit is arranged on top of the other laser scanning unit. By such configuration the two laser scanning units will cover the entire 360° around the robot arm 15. It is also possible to use more than two laser scanning units, e.g. three oriented at 120° between each other.

While not being described in detail herein, a laser scanning unit is well known in the art and for the operation of the safety system 100 also other types of sensors could be used such as cameras, infrared detectors, light curtains, etc.

Now returning to Fig. 3 the at least one sensor 110 is directed and configured to monitor the presence of objects 3 in a safety zone 5 extending horizontally from the at least one sensor 110. The safety zone 5 is in Fig. 3 indicated as a virtual circle surrounding the robot system 1.

As is further shown in Fig. 3 the safety zone 5 is divided into protection areas 7a-d and non-protection areas 9a-d. Between each pair of adjacent protection areas 7a-d, a non-protected area 9a-d is defined.

Each non-protected area 9a-d is defined as a sector of the safety zone 5 being hidden by a structural member 120 of the safety system 100. As the one or more sensors 110 cannot see behind a structural member 120, the area behind such structural member 120 is programmed to correspond to a non-protected area 9a-d. The dimensions of the protected areas 7a-d and the non-protected areas 9a-d are determined by means of the controller 130, which defines these areas 7a-d, 9a-d within the safety zone 5. Further, the controller 130 is configured to only detect objects located within the protection areas 7a-d such that any object detected within the non-protected areas 9a-d (i.e. the structural members 120) will not trigger the transmittal of the control signal S1. Hence, the one or more protection areas 7a-d are defined such that the at least one structural member 120 is arranged within the safety zone 5 and outside the one or more protection areas 7a-d.

Cables 12 are also indicated in Fig. 3, transmitting power, electrical control signals, pneumatic signals, etc. between the robot control system 20 (see Figs. 1-2) and the robot arm 15. For the embodiment shown in Fig. 1 these cables 12 must extend through the horizontal plane HP being monitored by the safety system 100. These cables 12 are preferably arranged not to interfere with the protection areas 7a-d, and are therefore guided close to the structural members 120, and circumferentially aligned with such structural members 120 either on the radially inward side, or the radially outward side. The cables 12 will thus be located within the non-protected areas 9a-d.

When two or more protection areas 7a-d are defined, it is important to define the maximum horizontal distance d1 between two adjacent protection areas 7a-d such that no person, or other unwanted moving object approaching the robot system 1, may enter the safety zone 5 without being detected by the safety system 100. For this, the maximum horizontal distance d1 between two adjacent protection areas 7a-d is less than 30 cm, preferably less than 15 cm. This is indicated in Fig. 3 where a person 3 is partly arranged in the protected area 7a, and partly located in the non-protected area 9b. The width of the non-protected area 9b is sufficiently small such that the person 3 is not able to be completely inside the non-protected area 9b without interfering with the adjacent protected area 7a.

Due to the ability to configure the safety system 100 it is possible to define occupied areas 8 corresponding to stationary and non-dangerous equipment or installations which are located within the safety zone 5. These occupied areas 8 can be programmed to be excluded from the one or more protection areas 7a-d such the their presence will not trigger the control signal S1.

The structural members 120 are preferably arranged at an equal distance from the at least one sensor 110 and in circular symmetry around said at least one sensor 110. In the shown example there a four structural members 120, spaced apart by 90°. This means that the non-protected areas 9a-d will also be spaced apart by 90°. By such circumferential symmetry it is possible to rotate the at least one sensor in fixed steps corresponding to the positions of the non-protected areas 9a-d, without the need for reprogramming the controller 130 in order to redefine the protection areas 7a-d and the non-protected areas 9a-d.

Especially, if sensors 110 are used not covering the entire 360° around the robot 10 it is possible to rotate the at least one sensor 110 e.g. if the robot system 1 needs to be rotated by 90°, while still maintaining the same direction and configuration of the safety zone 5. Hence, after rotating the robot system the at least one sensor 110 can be rotated back without needing and reprogramming of the non-protected areas 9a-d.

If further flexibility is desired it is even possible to configure the controller 130 to define further non-protected areas 9a-d, even though they are not required for omitting the structural members 120 from the safety zone 5. For example, non-protected areas of equal size may be defined at every 45°. It is thereby possible to allow rotation of the at least one sensor 110 by fixed steps of 45° without needing any reconfiguration of the non-protected areas 9a-d.

In Fig. 3 the safety zone 5 is divided in two opposite sub-safety zones 5a-b. This is to indicate a possible solution where a first sensor 110 is monitoring the first sub-safety zone 5a while a second sensor 110 is monitoring the second sub-safety zone 5b. By means of the controller 130, these sub-safety zones 5a-b can be merged so that the protection areas 7a-d and the non-protected areas 9a-d can be defined accordingly.

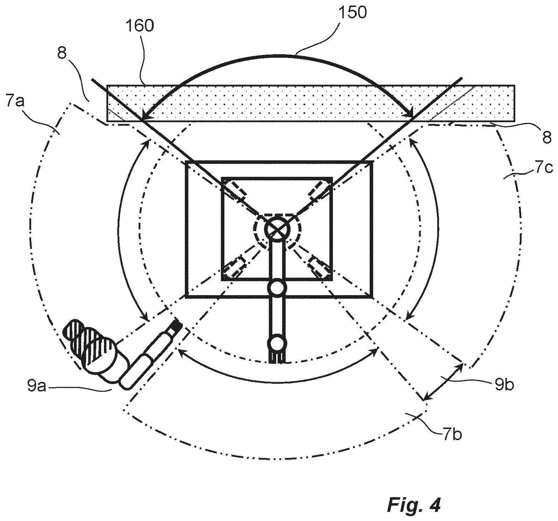

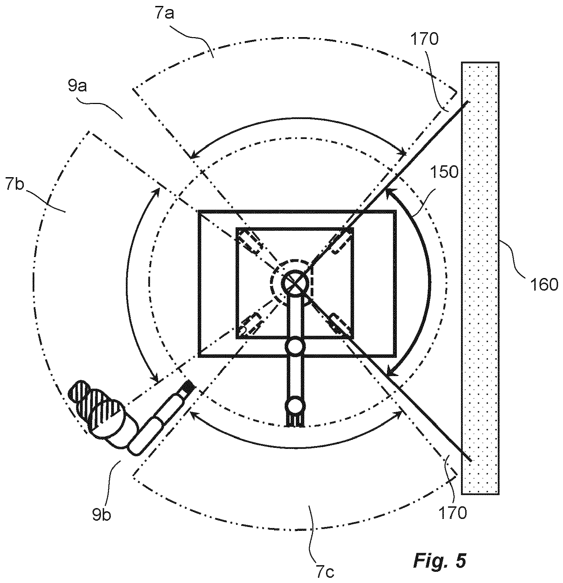

Now turning to Figs. 4 and 5 an embodiment is shown where the safety system 100 is configured to have a blind sector 150, i.e. the at least one sensor 110 is not capable of monitoring the blind sector 150. In practice, the robot system 1 may be located in an environment having other equipment 160 near the robot system 1. By rotating the at least one sensor 110 it is possible to make sure that such equipment 160 is arranged to fully or partly cover the blind sector 150, giving the robot arm 15 natural access to such equipment 160 without having to configure such equipment segment as an occupied area 8 by the controller 130. It is further possible to configure the controller 130 to define small scanning sections 170 on each side of the blind section 150, and to program the controller 130 to transmit a control signal S1 if an unwanted object enters any of the small scanning sections 170. The provision of such small scanning sections 170 will further improve the safety system 100, as the scanning sections 170 can be used to detect if a person 3 is on its way towards the blind section 150. In such case, according to various regulations the collaborative robot 10 must be completely stopped. Further, according to the same regulations a reset is normally required before the collaborative robot 10 can resume its operation. Hence, these scanning sections 170 can be used by the controller 130 which may be controlled to monitor the scanning sections 170 as stop zones such that any presence of unwanted objects in the scanning sections 170 will cause the transmission of the control signal S1 to completely stop the collaborative robot 10. Instead of adding additional sensors to monitor the blind section 150, or risking non-acceptable operation of the collaborative robot 10 when a person 3 or object is inside the blind section 150, the safety system 100 monitors the adjacent scanning sections 170.

The equipment 160 may in some embodiments instead be a wall or other fixed installation. As the at least one sensor 110 is rotatable, preferably in fixed steps corresponding to the distance between adjacent non-protected areas 9a-d, the robot system 1 can be positioned in one of many available orientations without requiring redefinition of the non-protected areas 9a-d.

In another embodiment the safety system 100 is configured to load predefined configurations of protected areas 7a-d and non-protected areas 9a-d. This is particularly advantageous for predefined working cells to which the robot system 1 is assigned. For example, the safety system 100 is capable of accessing or reading working cell ID, and to load a suitable configuration. In specific embodiments the at least one sensor 110 may perform an initial scanning of the safety zone 5 at a situation where no unwanted objects are present, whereby the controller 130 automatically defines or corrects the dimensions and locations of the protection areas 7a-d and the non-protected areas 9a-d, optionally together with other occupied areas 8.

It is apparent to a person skilled in the art that the basic idea may be implemented in various ways. The invention and its embodiments are thus not limited to the examples described above; instead they may vary within the scope of the claims.

## Claims

1. A safety system (100) for a collaborative robot (10), comprising at least one sensor (110) configured to monitor the presence of objects in a safety zone (5) extending horizontally from said at least one sensor (110), and at least one structural member (120) configured to support a robot (10) arranged vertically above the safety system (100), wherein the safety system (100) further comprises a controller (130) configured to define one or more protection areas (7a-d) within the safety zone (5) and configured to determine the presence of an unwanted object (3) within the one or more protection areas (7a-d), and wherein the one or more protection areas (7a-d) are defined such that the at least one structural member (120) is arranged within the safety zone (5) and outside the one or more protection areas (7a-d).

2. The safety system (100) according to claim 1, wherein the controller (130) is configured to define two or more protection areas (7a-d), and wherein the maximum horizontal distance (d1) between two adjacent protection areas (7a-d) is less than 30 cm, preferably less than 15 cm.

3. The safety system (100) according to claim 1 or 2, wherein the controller (130) is further configured to define occupied areas (8) corresponding to stationary objects within the safety zone (5), and wherein the occupied areas (8) are excluded from the one or more protection areas (7a-d).

4. The safety system (100) according to any of claims 1-3, wherein the one or more protection areas (7a-d) equal the safety zone (5) minus an area being shadowed by the at least one structural member (120), and optionally minus the occupied areas (8).

5. The safety system (100) according to any of the preceding claims, wherein the at least one sensor (110) is in the form of at least one area scanner.

6. The safety system (100) according to any of the preceding claims, comprising a plurality of structural members (120) arranged at an equal distance from the at least one sensor (110) and in circular symmetry around said at least one sensor (110).

7. The safety system (100) according to any of the preceding claims, wherein the at least one structural member (120) has a horizontal cross-section being extended in the direction away from said at least one sensor (110).

8. The safety system (100) according to any of the preceding claims, wherein the safety zone (5) extends 270°-360° around the at least one sensor (110).

9. The safety system (100) according to any of the preceding claims, comprising a plurality of sensors (110), wherein each sensor (110) is monitoring a sub-safety zone (5a, 5b) forming part of the safety zone (5) of the safety system (100).

10. A collaborative robot system (1), comprising a collaborative robot (10) and a safety system (100) according to any of the preceding claims, wherein the safety system (100) is configured to transmit a control signal (S1) to the collaborative robot (10) upon detection of an unwanted object within the one or more protection areas (7a-d).

11. The collaborative robot system (1) according to claim 10, wherein the at least one sensor (110) is vertically aligned with a base (11) of the collaborative robot (10).

12. The collaborative robot system (1) according to claim 10 or 11, further comprising a moveable platform (30) and wherein the safety system (100) is arranged vertically between said moveable platform (30) and the collaborative robot (10).

13. The collaborative robot system (1) according to claim 12, wherein the collaborative robot (10) further comprises a robot control system (20) arranged vertically between the safety system (100) and the moveable platform (30).

14. The collaborative robot system (1) according to claim 13, wherein the collaborative robot (10) is connected by means of one or more connectors (12), each connector (12) is arranged not to interfere with the one or more protection areas (7a-d).

15. The collaborative robot system (1) according to any of claims 10-14, wherein the at least one sensor (110) of the safety system (100) is rotatable relative the collaborative robot (10).
